# EUROPÄISCHE PATENTSCHRIFT

(11) **EP 2 105 074 B1**
(45) Veröffentlichungstag und Bekanntmachung des Hinweises auf die Patenterteilung: **20.07.2011**
(21) Anmeldenummer: 08103138.7
(22) Anmeldetag: 28.03.2008
(51) Int. Cl.: A47J 31/36

(54) **Vorrichtung und Anordnung zum Zubereiten eines flüssigen Lebens- oder Genussmittels sowie Portionsverpackung**
Device and array for preparing a liquid food or luxury article and portion packaging
Dispositif et agencement de préparation d'un produit alimentaire ou de dégustation liquide et emballage en portion

(43) Veröffentlichungstag der Anmeldung: 30.09.2009
(73) Patentinhaber: Delica AG, 4127 Birsfelden (CH)
(72) Erfinder: Deuber, Louis, 8805 Richterswil (CH)
(74) Vertreter: Hepp Wenger Ryffel AG

(56) Entgegenhaltungen:
- WO-A-2007/017455
- WO-A-2008/004116

## Beschreibung

Die Erfindung betrifft eine Vorrichtung zum Zubereiten eines flüssigen Lebens- oder Genussmittels aus einem in einer Portionsverpackung enthaltenen Verpackungsgutes gemäss dem Oberbegriff von Anspruch 1. Weiterhin betrifft die Erfindung eine Anordnung mit einer derartigen Vorrichtung und einer Portionsverpackung. Solche Vorrichtungen haben sich vor allem für die Zubereitung von Getränken wie z.B. Kaffee, Tee oder Kakao durchgesetzt. Bei den Portionsverpackungen kann es sich um Kapseln handeln, mit denen eine Trockensubstanz oder allenfalls auch andere Verpackungsgüter auf vorteilhafte Art und Weise abgepackt werden können.

Portionsverpackungen zum Zubereiten von flüssigen Lebens- oder Genussmitteln sind seit längerer Zeit bekannt und gebräuchlich. Aus der EP 1 101 430 oder EP 1 344 722 sind beispielsweise vergleichbare Kapseln bekannt geworden. Die Kapseln verfügen über einen becherartigen, mit einem flanschartigen Kragen versehenen Grundkörper, der im Bereich des Kragens mit einer Folie verschlossen ist.

Eine Vorrichtung, mit der das in solchen Kapsel enthaltenene Extraktionsgut extrahierbar ist, beschreibt beispielsweise die WO 2007/017455. Die Vorrichtung enthält ein schwenkbares Kammerteil, das eine Kavität zur Aufnahme der Kapsel aufweist. Zum einfachen Handhaben der Kapsel für einen Konsumenten ist das Kammerteil in einer Einlegeposition vertikal und in einer Schliess- bzw. Extraktionsstellung horizontal ausgerichtet.

Sodann sind Vorrichtungen bekannt geworden, bei denen die Kammerteile lediglich translatorische Bewegungen vollführen. Eine derartige Vorrichtung zeigt etwa die EP 1 757 212 A2. Hier ist eine gattungsmässig vergleichbare Vorrichtung beschrieben, die zwei auf einer horizontalen Achse relativ zueinander bewegbare Kammerteile aufweist. Die Kapsel wird über seitlich angeordnete Führungs- und Sperrmittel unter Schwerkrafteinwirkung in eine Zwischenstellung eingelegt. Zum Erstellen einer Extraktionsstellung werden die Sperrmittel beim Überfahren des beweglichen Kammerteils zur Seite gestossen, wodurch die Kapsel von den Sperrmitteln befreit wird. Der Mechanismus zum Sperren und Befreien der Kapsel von den Sperrmitteln ist vergleichsweise komplex und benötigt spezielle Bauteile.

Durch die EP 1 859 714 ist eine Aufbrühvorrichtung zum Aufbrühen einer Kapsel bekannt geworden, wobei die Kapsel zwischen zwei Umfassungsgliedern aufnehmbar ist, welche relativ zueinander zwischen einer Offenstellung und einer Schliessstellung beweglich sind. Vor dem Erreichen der Schliessstellung ist die Kapsel in einem Kapselhalteglied gehalten, die eine Haltekammer aufweist. Beim Schliessen der Kapselumfassungsglieder wird wenigstens ein Abschnitt der Kapsel gezwungen, sich derart zu biegen, dass die Haltekammer die Kapsel in der Aufbrühstellung nicht mehr hält.

Es ist daher eine Aufgabe der Erfindung, eine Vorrichtung der eingangs genannten Art zu schaffen, die hinsichtlich Funktionalität und Aufbau vereinfacht ist. Die Vorrichtung soll einfach hergestellt werden können. Diese Aufgabe wird erfindungsgemäss mit einer Vorrichtung gelöst, welche die Merkmale in Anspruch 1 aufweist.

Dadurch, dass beim Bewegen der Kammerteile von der Offenstellung in die Schliessstellung (Schliessvorgang) die Positioniereinheit derart auf den Kragen der Portionsverpackung einwirkt, dass der Kragen durch Verformung aus der Einlegeposition befreibar ist, wird eine erhebliche Vereinfachung der Vorrichtung bewirkt. So kann mit einer derartigen Gestaltung der Vorrichtung auf eine spezielle Bewegbarkeit der Positioniereinheit für die Befreiung des Kragens von der Positioniereinheit verzichtet werden, da eben nur der Kragen bewegt werden muss.

Bei der Portionsverpackung kann es sich um eine Kapsel handeln, die ein Extraktionsgut wie z.B. Kaffee oder Tee enthält. Die Portionsverpackung kann zum Erreichen der Einlegeposition vorzugsweise durch Schwerkraft in die Positioniereinheit einführbar sein. Ein Kammerteil kann als Kapselhalter mit einer Kavität zur Aufnahme der Kapsel und das andere Kammerteil kann als Verschlussteil zum Verschliessen der Kavität ausgebildet sein. Wenigstens einem der Kammerteile, vorzugsweise jedoch jedem Kammerteil können Mittel zum Penetrieren der Kapsel und zum Durchleiten des Extraktionsmittels durch die geschlossene Extraktionskammer und durch die Kapsel zugeordnet sein.

In einer ersten Ausführungsform ist wenigstens eines der Kammerteile in axialer Richtung verschiebbar. Für die Freigabe aus der Einlegeposition kann die Positioniereinheit eine Anschlagfläche zum abschnittsweisen Umklappen oder Umbiegen des Kragens in axialer Richtung aufweisen. Ersichtlicherweise muss die Positioniereinheit in einer Querrichtung zur axialen Richtung nicht bewegbar ausgestaltet sein. Die Positioniereinheit kann mit anderen Worten bezogen auf eine vorzugsweise im rechten Winkel zur axialen Richtung verlaufenden Querrichtung unbeweglich ausgestaltet sein.

Die Positioniereinheit umfasst zwei einander gegenüberliegende Haltebacken mit Führungsmitteln, in die der Kragen der Portionsverpackung in der Einlegeposition aufnehmbar ist. Die Positioniereinheit ist vorzugsweise derart ausgebildet, dass die Kapsel in der Einlegeposition etwa genau auf die später einzunehmende Extraktionsposition ausgerichtet ist. In der Extraktionsposition befindet sich die Kapsel, wenn die Kammerteile sich in einer vorzugsweise dichtenden Schliessstellung befinden und die Portionsverpackung in der Kammer einschliessen.

Die Führungsmittel bilden einen sich in Einführrichtung der Kapsel verjüngenden Führungskanal. Der jeweilige Führungskanal kann keilförmig ausgestaltet sein. Selbstverständlich ist es aber auch denkbar, dass der Führungskanal wenigstens abschnittsweise parallel verlaufende Seitenwände aufweist. Der Führungskanal ist in Form einer Nut ausgestaltet.

Zum Festlegen der Einlegeposition kann der Führungskanal begrenzt ausgebildet sein. Im Fall einer Führungsnut kann er beispielsweise in Einlegerichtung durch einen bevorzugt komplementär zum Kragen ausgebildeten Nutabschluss verschlossen sein. Alternativ kann die Führungsnut einen Nutboden aufweisen, der in Einlegerichtung sich verjüngt. Die beiden einander gegenüberliegenden Nutböden können somit eine V- oder Keilform definieren.

Für eine präzise Festlegung der Einlegeposition ist es vorteilhaft, dass der Kragen in der Einlegeposition klemmend im Führungskanal gehalten ist.

Hinsichtlich Funktionalität und Handhabbarkeit kann es vorteilhaft sein, wenn die Führungsmittel bezogen auf die Einführrichtung einen Einführabschnitt und einen daran anschliessenden Positionierabschnitt aufweisen, wobei der Positionierabschnitt gegenüber dem Einführabschnitt zum Vorbeiführen eines der Kammerteile beim Schliessvorgang zurückversetzt ist. Der zurückversetzte Positionierabschnitt hat weiter den Vorteil, dass der Überlappungsbereich zwischen Positioniereinheit und Kragen der Portionsverpackung verkleinert ist, wodurch die Verformung des Kragens erleichtert ist.

Besonders vorteilhaft kann es sein, wenn das Führungsmittel mit nutartigen Führungskanälen ausgebildet ist, wobei ein Führungskanal in einem die Einlegeposition festlegenden Abschnitt eine Nuttiefe von maximal 2 mm, bevorzugt maximal 1 mm aufweist. Theoretisch wäre es aber auch denkbar, den Führungskanal ohne Nutboden oder mit einem weiter vertieften Nutboden vorzusehen. In diesem Fall wäre die Positioniereinheit derart auszubilden, dass die maximale Eindringtiefe des Kragens in den Führungskanal maximal 2 mm, vorzugsweise 1 mm beträgt. Die Positioniereinheit könnte auch eine sich über einen Sektor erstreckende teilkreisförmige Aufnahme für den Kragen aufweisen.

An der Positioniereinheit können Mitnehmer angeordnet sein, mit denen die Kapsel bei einem Öffnungsvorgang zum Wiederherstellen der Offenstellung aus der Schliessstellung aus einer durch eines der Kammerteile gebildeten Kavität entfernbar ist.

Der Mitnehmer kann eine am Haltebacken angeordnete Hinterschneidung sein, über die der Kragen zum Herausziehen der Kapsel in axialer Richtung beim Öffnungsvorgang erfassbar ist.

Weiterhin kann es vorteilhaft sein, wenn der Kragen an einem relativ zur Positioniereinheit in axialer Richtung bewegbaren, einem Kammerteil zugeordneten Halterand abstützbar ist. Der Halterand kann dabei eine Knickstelle für das Umklappen des Kragens beim Schliessvorgang definieren.

Besonders vorteilhaft kann es sein, wenn am Halterand eine Anschrägung oder Ausnehmung zur kurzzeitigen Aufnahme während des Schliessvorgangs des umgeklappten Kragens anschliesst. Auf diese Weise kann eine unerwünschte Beschädigung oder eine Verklemmung des Kragens vermieden werden.

In einer vorteilhaften Ausführungsform kann ein Kammerteil feststehend und das andere Kammerteil beweglich in der Vorrichtung angeordnet sein. Dabei kann die Positioniereinheit zusammen mit dem beweglichen Kammerteil in axialer Richtung verfahrbar sein. Das feste Kammerteil kann hinsichtlich seiner Aussendimensionierung derart dimensioniert sein, dass es beim Schliessvorgang zwischen den Haltebacken einführbar ist.

Ein weiterer Aspekt der Erfindung betrifft eine Anordnung zum Zubereiten eines flüssigen Lebens- oder Genussmittels mit einer Portionsverpackung und der vorgängig beschriebenen Vorrichtung.

Schliesslich betrifft die Erfindung noch eine Portionsverpackung, insbesondere eine Kapsel zur Verwendung in der vorgängig beschriebenen Vorrichtung. Die Portionsverpackung zeichnet sich durch einen vorzugsweise umlaufenden Kragen auf, der derart flexibel ausgebildet ist, dass er beim Schliessvorgang zum Lösen der haltenden Beaufschlagung in der Einlegeposition durch die Positioniereinheit verformbar ist. Wenigstens der Kragen, vorzugsweise jedoch auch der am Kragen anschliessende Kapselkörper kann aus einem flexiblen Kunststoffmaterial bestehen, das nach einer Deformation über federnde Rückstelleigenschaften verfügt. Dank dieser Rückstelleigenschaften ist der Kragen nur kurzzeitig während des Schliessvorgangs verformt. Nach Abschluss des Schliessvorgangs, d.h. also in der Schliessstellung befindet sich der Kragen wieder in seiner ursprünglichen Position. Der Kragen kann dabei sich vom Kapselkörper in radialer Richtung nach aussen erstrecken.

Weitere Vorteile und Einzelmerkmale der Erfindung ergeben sich aus der nachfolgenden Beschreibung von Ausführungsbeispielen und aus den Zeichnungen. Es zeigen:
- Figur 1: eine perspektivische Darstellung einer erfindungsge- mässen Vorrichtung in Offenstellung mit einer Kapsel in Einlegeposition,
- Figur 2: eine Draufsicht auf die Vorrichtung gemäss Figur 1, jedoch ohne Kapsel,
- Figur 3: einen Längsschnitt durch die Vorrichtung in Offen- stellung (Schnittebene w-w gemäss Figur 2), vor dem Einführen der Kapsel,
- Figur 4: eine Detailansicht aus Figur 2 mit einer vergrösser- ten Darstellung einer Positioniereinheit,
- Figur 5: die vergrösserte Positioniereinheit aus der Darstel- lung gemäss Figur 3,
- Figur 6a: einen Querschnitt durch die Vorrichtung (Schnittebene m-m) gemäss Figur 4,
- Figur 6b: einen weiteren Querschnitt mit hälftiger Darstellung der Vorrichtung (Schnittebene k-k) gemäss Figur 4,
- Figur 6c: der Querschnitt gemäss Figur 6b, jedoch mit einer eingelegten Kapsel,
- Figur 6d: das Detail F aus Figur 6c in stark vergrösserter Dar- stellung,
- Figur 7: eine Draufsicht auf eine Vorrichtung in Offenstellung mit eingelegter Kapsel,
- Figur 8: einen Längsschnitt durch die Vorrichtung in Offen- stellung mit einer Kapsel in der Einlegeposition,
- Figur 9: eine Draufsicht auf die Vorrichtung gemäss Figur 7, jedoch nach einem ersten Teilschritt des Schliessvor- gangs (ohne Betätigungshebel),
- Figur 10: einen Längsschnitt durch die Vorrichtung in der Stel- lung gemäss Figur 9 (mit Betätigungshebel),
- Figur 11: einen Schnitt durch die Vorrichtung (Schnittebene q- q) gemäss Figur 10,
- Figur 12: das Detail D aus Figur 11 in stark vergrösserter Dar- stellung,
- Figur 13: das Detail D gemäss Figur 12, jedoch nach einem wei- teren, zweiten Teilschritt des Schliessvorgangs,
- Figur 14: die Vorrichtung gemäss Figur 11 nach einem gegenüber Figur 13 weiteren Fortfahren der Schliessbewegung,
- Figur 15: das Detail E aus Figur 14 in stark vergrösserter Dar- stellung,
- Figur 16: eine Draufsicht auf die Vorrichtung gemäss Figur 14 nach vollständigem Schliessen (Schliessstellung),
- Figur 17: einen Längsschnitt durch die Vorrichtung gemäss Figur 14 bzw. 16 in Schliessstellung,
- Figur 18: eine Draufsicht der Vorrichtung nach Wiederherstellen der Offenstellung mit herausgezogener Kapsel,
- Figur 19: einen Längsschnitt durch die Vorrichtung gemäss Figur 18 mit einer herunterfallenden Kapsel,
- Figur 20: eine Draufsicht auf eine Schnittdarstellung der Vor- richtung in der Stellung gemäss Figur 18,
- Figur 21: das Detail gemäss Figur 15, jedoch mit einer Darstel- lung des Herausziehvorgangs der Kapsel aus einer Ka- vität eines Kammerteils und
- Figur 22: eine perspektivische Darstellung einer Vorrichtung gemäss einem zweiten Ausführungsbeispiel.

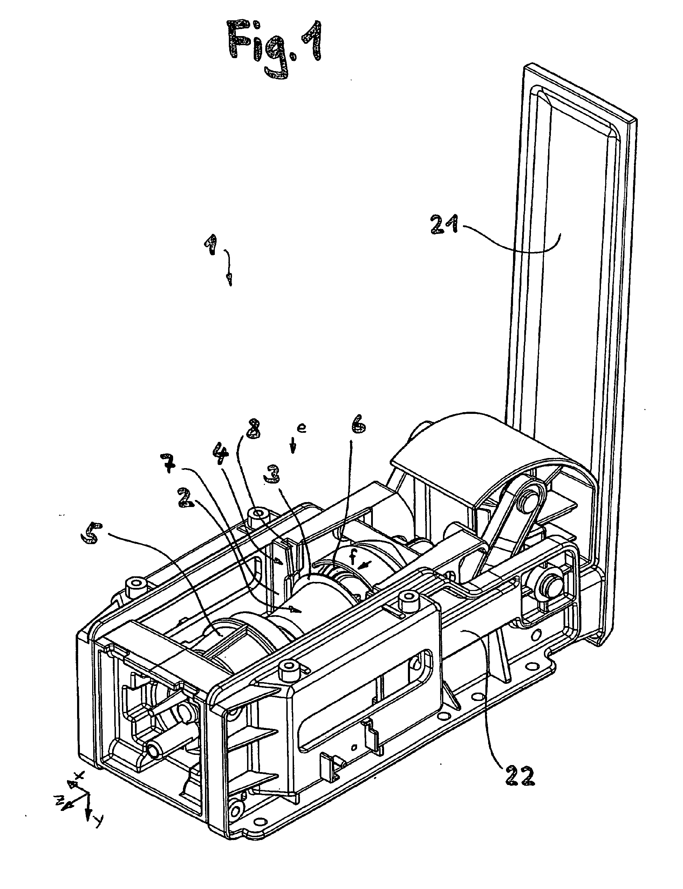

Figur 1 zeigt eine als Modul gestaltete erfindungsgemässe Vorrichtung 1, die beispielsweise in eine Kaffeemaschine eingebaut werden kann. Mit einer derartigen Vorrichtung kann der Inhalt einer Kapsel 2 enthaltend Kaffeepulver extrahiert werden. Selbstverständlich kann die Kapsel auch anderes Verpackungsgut enthalten, insbesondere z.B. lösbare Trockensubstanzen. Die Kapsel 2 besteht aus einem topf- oder becherförmigen Kapselkörper, der vorzugsweise aus einem Kunststoffmaterial wie z.B. Polypropylen besteht und in einem Tiefziehverfahren oder in einem Spritzgussverfahren hergestellt werden kann. Am Kapselkörper schliesst eine mit 3 bezeichneter Kragen an, der ein offenes Ende des Kapselkörpers definiert. Die Kapsel ist mit einer Deckelfolie verschlossen, die in der Regel ebenfalls aus Kunststoff besteht.
Die nachstehend beschriebene Vorrichtung eignet sich aber grundsätzlich für alle Arten und Formen von Portionsverpackungen, die mit Kragen versehen sind.

Die Vorrichtung 1 verfügt über zwei Kammerteile 5 und 6, die in axialer Richtung z relativ zu einander verschiebbar sind. Beim vorliegenden Ausführungsbeispiel ist das als Verschlussteil ausgebildete Kammerteil 6 bewegbar, während das andere Kammerteil 5 feststehend in der Vorrichtung 1 angeordnet ist. Das Kammerteil 5 ist als Kapselhalter mit einer Kavität ausgestaltet, in die die Kapsel 2 aufnehmbar ist. Die Kapsel 2 ist mit Hilfe einer Positioniereinheit 4 in einer Einlegeposition zwischen den von einander beabstandeten Kammerteilen 5 und 6 in der Offenstellung positioniert. Das bewegliche Kammerteil 6 ist verschiebbar zwischen zwei Supporthälften 22 des Moduls gelagert. Mit x, y und z ist ein kartesisches Koordinatensystem angedeutet. Mit z ist eine axiale Richtung festgelegt. In dieser Richtung erfolgt der Schliess- und Öffnungsvorgang. Die entsprechende Schliessrichtung ist mit einem Pfeil f bezeichnet. Mit dem Pfeil e ist die Einlegerichtung angedeutet. Die Schliessbewegung wird manuell durch Betätigen eines Schwenkhebels 21 bewirkt. Die Vorrichtung 1 kann vorteilhaft in horizontaler Ausrichtung in eine entsprechende Maschine eingebaut werden. Eine derartige Einbauart ermöglicht es, dass die Kapsel 3 durch Schwerkraft auf einfache Art und Weise in die Einlegeposition gebracht werden kann. Selbstverständlich sind auch andere Einbauarten (z.B. vertikal anstatt horizontal ausgerichtet) denkbar.

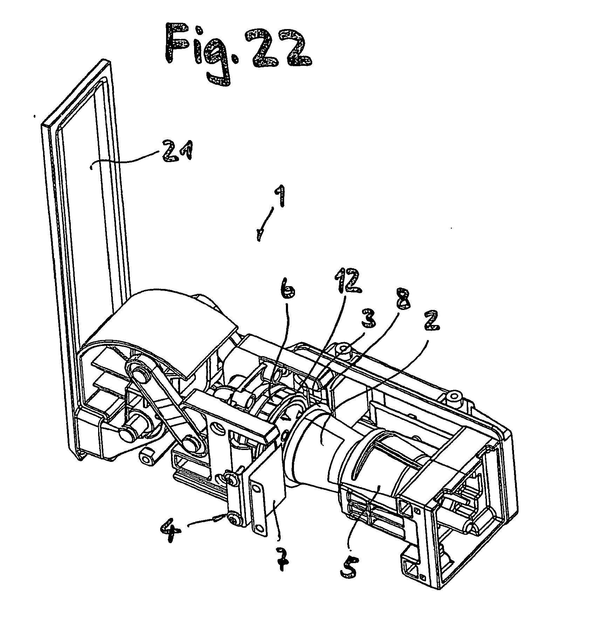

Jedes der Kammerteile 5 und 6 verfügt über (nicht gezeigte) Mittel zum Penetrieren der Kapsel und zum Durchleiten des Extraktionsmittels durch die Kapsel. Auch in den nachfolgenden Figuren des ersten Ausführungsbeispiels wurde allerdings der Einfachheit halber auf eine Darstellung der Penetrationsmittel verzichtet (vgl. aber Figur 22).

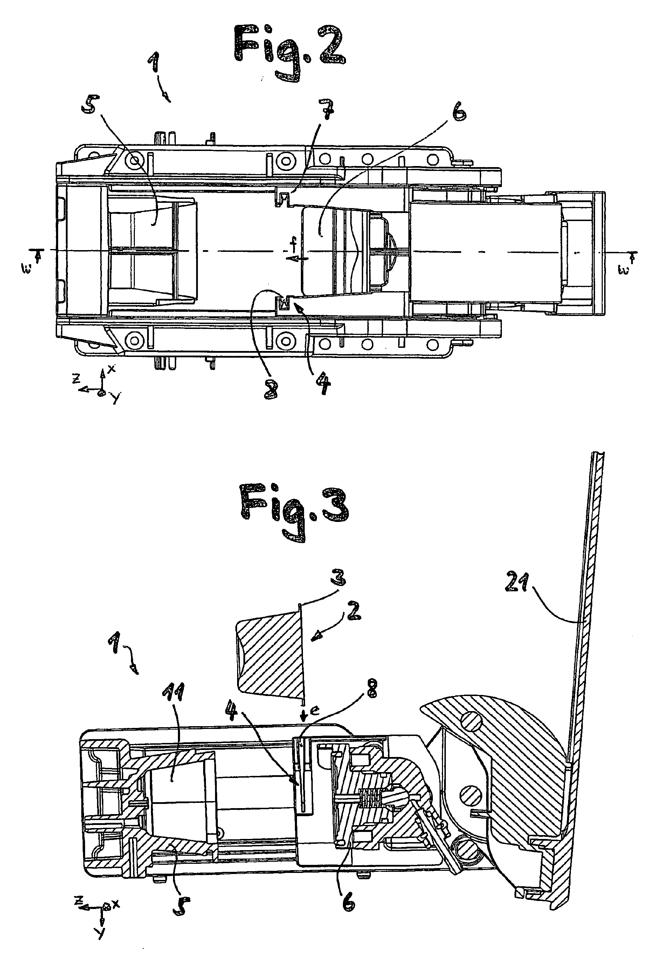

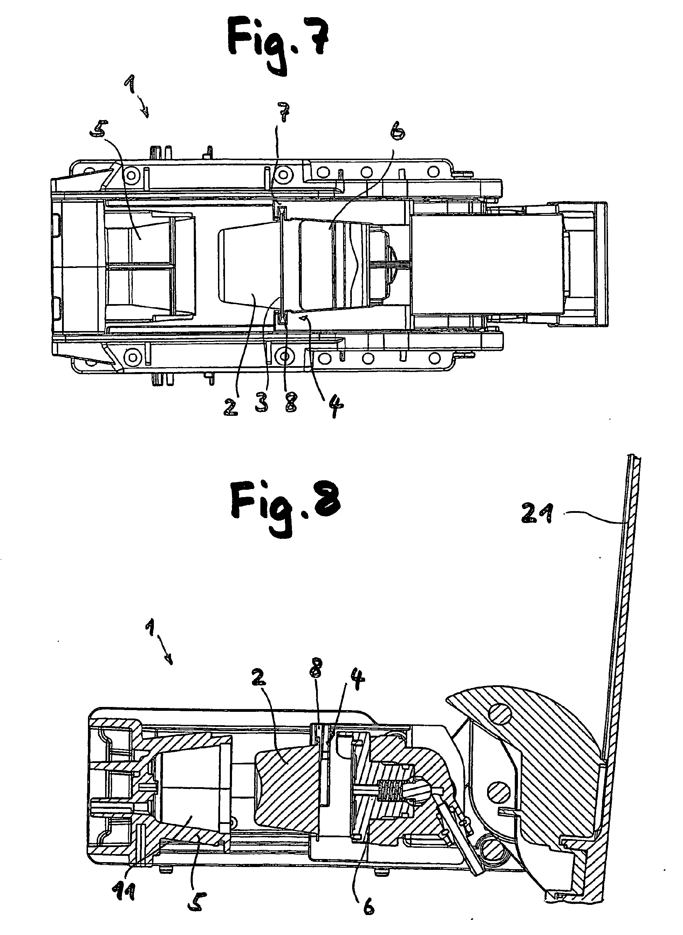

In den Figuren 2 und 3 sowie 7 und 8 ist die Vorrichtung 1 in einer Draufsicht und einer seitlichen Längsschnittdarstellung gezeigt. Wie aus Figur 3 hervorgeht, kann die Kapsel 2 von oben her in die Vorrichtung 1 eingelegt werden. Die Positioniereinheit 4 verfügt über jeweils seitlich angeordnete Haltebacken 7 mit Führungskanälen 8, in die der Kragen 3 der Kapsel 2 einführbar ist. In Figur 8 ist schliesslich die Kapsel 2 in ihrer Einlegeposition in der Vorrichtung 1 erkennbar.

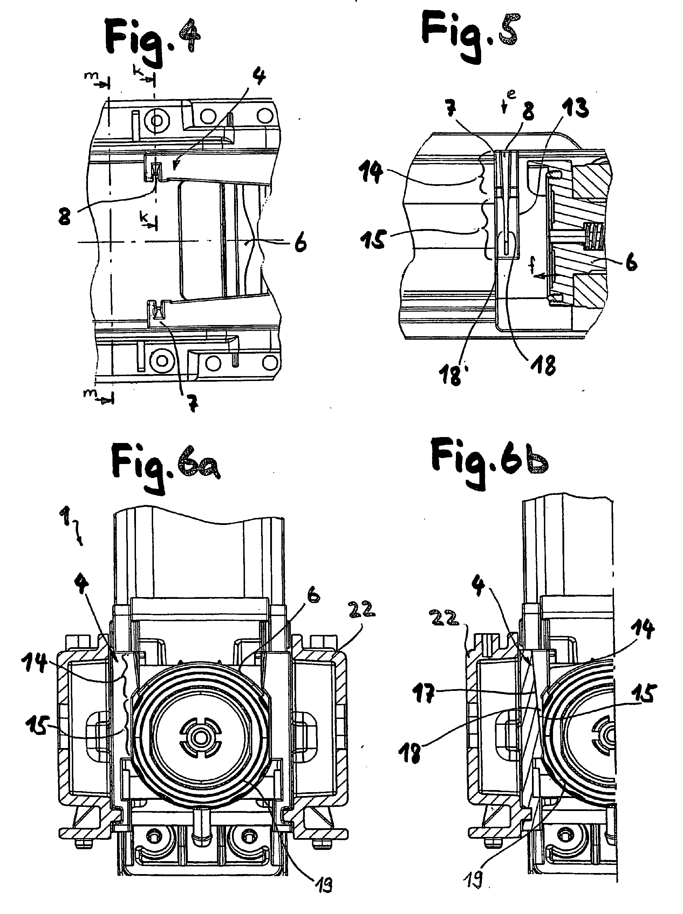

Aus den Figuren 4 und 5 geht deutlich hervor, dass der Führungskanal 8 als Führungsnut ausgestaltet ist. Mit 18 und 18' sind die Seitenwände des Führungskanals 8 bezeichnet, zwischen welchen der (hier nicht gezeigte) Kragen etwa sandwichartig aufnehmbar ist. Der Führungskanal 8 verjüngt sich in Einführrichtung e. Die beiden einander gegenüber liegenden Seitenwände 18 und 18' sind ersichtlicherweise keilförmig ausgerichtet.

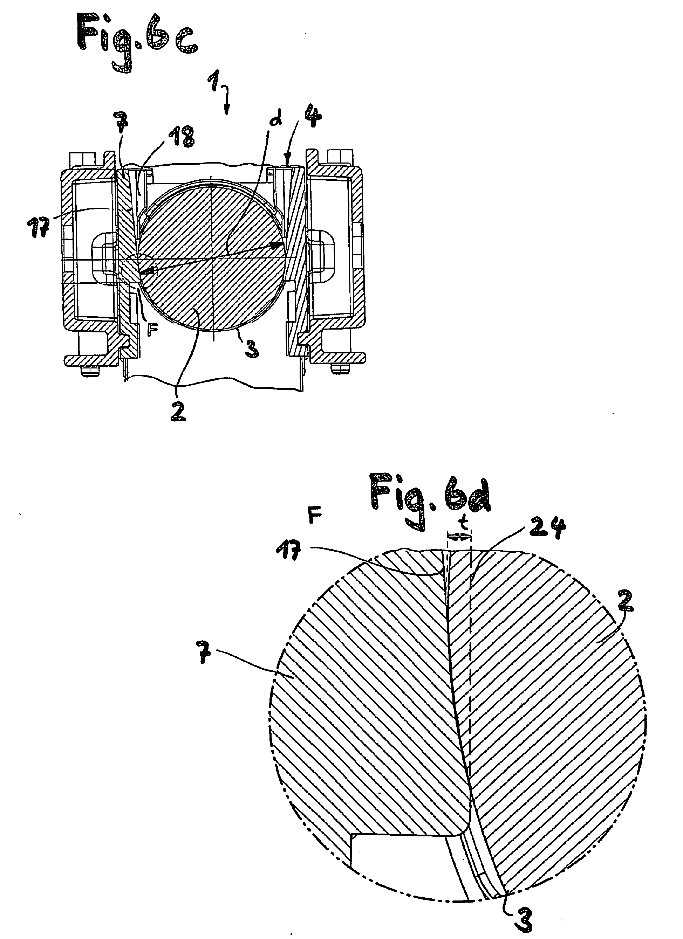

Figur 5 und 6a zeigen unter anderem, dass am Führungskanal ein Einführabschnitt 14 und ein daran anschliessender Positionierabschnitt 15 vorgesehen ist. Der erste Abschnitt 14 hat den Zweck, ein möglichst einfaches Einführen der Kapsel zu ermöglichen. Der zweite Abschnitt 15 ist gegenüber dem Abschnitt 14 zurückversetzt, wodurch einerseits das gegenüberliegende Kammerteil 5 vorbeiführbar ist. Andererseits wird auf diese Weise eine (nachfolgend noch näher beschriebene) vorteilhafte Verformung des Kragens zugelassen. Figur 6b zeigt, dass der Nutboden 17 des Führungskanal als Keilfläche ausgebildet ist, die schräg nach unten sich verjüngt. Mit 19 ist ein Injektorboden des Verschlussteils 6 bezeichnet, an dem eine (nicht gezeigte) Injektorplatte mit Penetrationsmitteln anbringbar ist. Figur 6c zeigt die Kapsel 2 in der Einlegeposition in der Positioniereinheit. Der Nutboden 17 verläuft bezogen auf die Einlegerichtung zunächst gerade, ist jedoch in einem die Einlegeposition festlegenden Abschnitt komplementär zum Kapselrand in diesem Schnitt kreisförmig ausgestaltet. Der Durchmesser des Randes 3 ist mit d bezeichnet und beträgt beispielhaft 40 mm. Details der genauen Einlegeposition sind sodann in Figur 6d erkennbar. Wie Figur 6d zeigt, ist die maximale Eindringtiefe des Kragens 3 in den Führungskanal relativ gering. Die mit t bezeichnete Eindringtiefe beträgt bei einem Kragendurchmesser von 40 mm ca. 0.7 mm. Die gestrichelte Linie 24 deutet die nach innen gewandte Begrenzung der Seitenwand (18) des Führungskanals an. In Figur 8 ist erkennbar, dass die Kapsel 2 dank der Positioniereinheit 8 exakt koaxial zur Kavität 11 ausgerichtet ist.

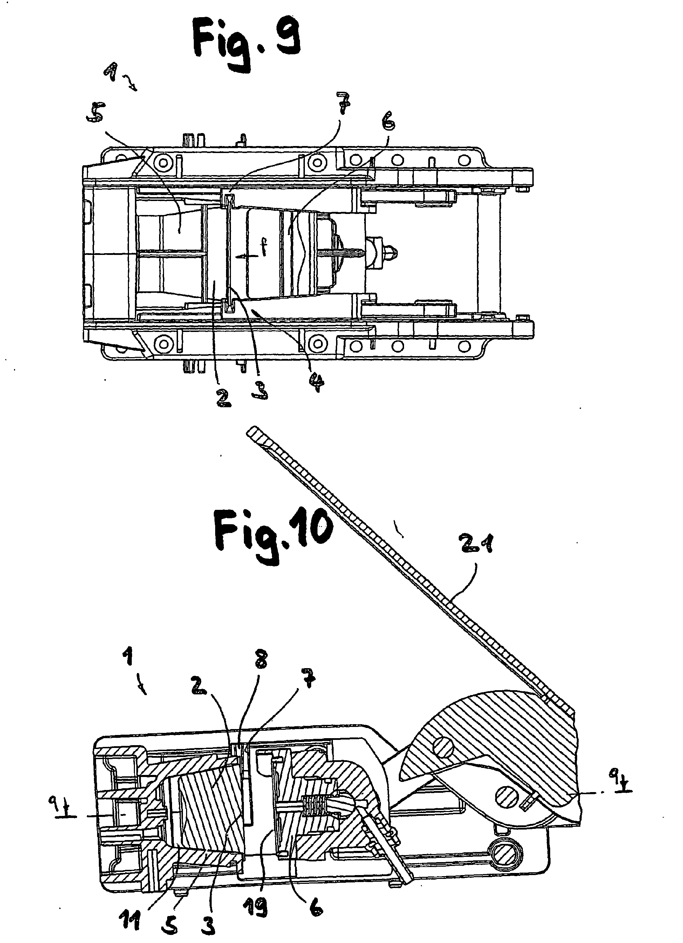

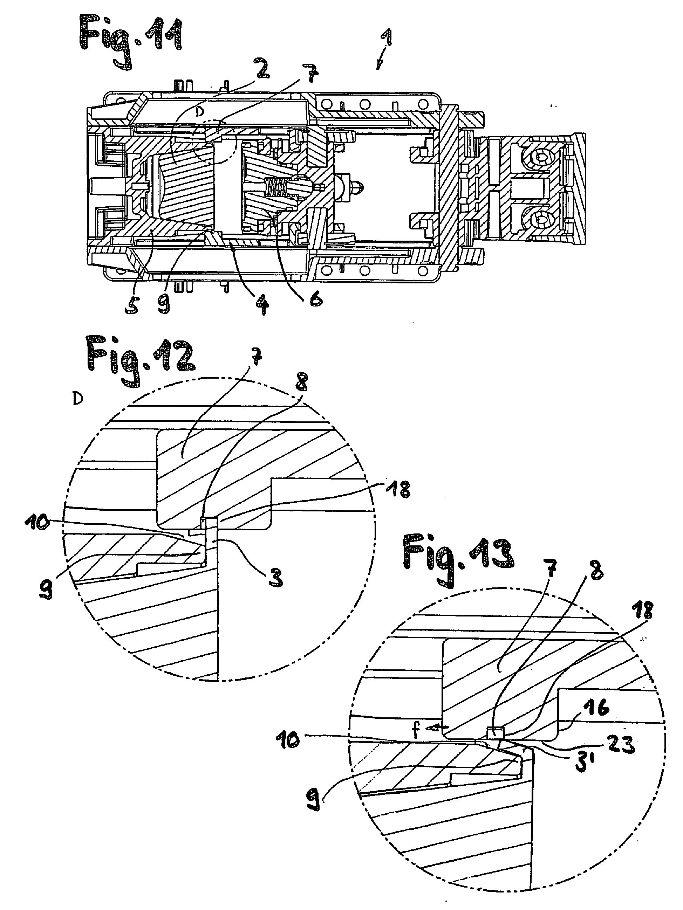

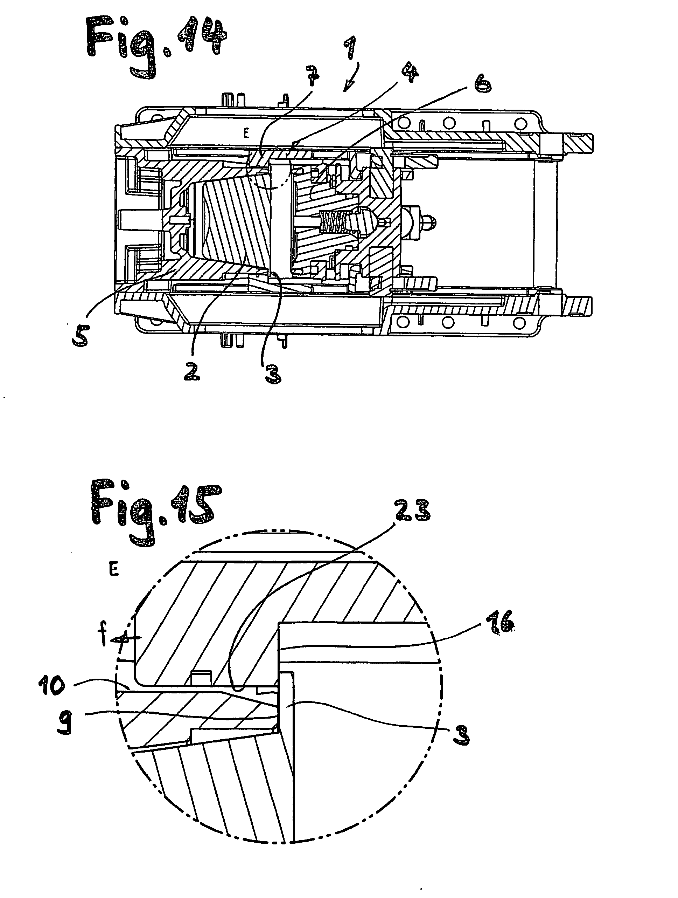

In den Figuren 9 bis 11 wurde das Kammerteil 6 zusammen mit der Positioniereinheit 4 ein erstes Teilstück in f-Richtung bewegt. Wie aus Figur 12 hervorgeht, stösst hier der Kragen 3 an einen Halterand 9 des feststehenden Kammerteils 5 an. Aus Figur 12 geht weiterhin hervor, dass am Halterand 9 eine Anschrägung 10 anschliesst. Wird nun der Haltebacken 7 weiter in f-Richtung bewegt, so wird der Kragen 3 umgebogen oder umgeknickt. Die Seitenwand 18 des Führungskanals 8 bildet hierfür eine entsprechende Anschlagsfläche, die auf den Kragen 3 einwirkt. Diese Stellung ist in Figur 13 erkennbar. Figur 13 zeigt zum Beispiel deutlich, dass der Kragen umgeknickt ist. Der umgeknickte Kragen 3' liegt auf der Anschrägung 10 auf, wodurch ein zu weites Umknicken vermieden wird. Wird nun der Haltebacken 7 (zusammen mit dem Kammerteil 6) weiter in Schliessrichtung bewegt, so fährt der umgeknickte Kragen 3' die mit 23 bezeichnete Gleitfläche ab, bis er nach Erreichen der Hinterschneidung 16 von der gleitenden Beaufschlagung wieder freigegeben wird. Dadurch, dass die Kapsel und insbesondere der Kragen 3 aus einem elastischen Kunststoffmaterial besteht, nimmt der Kragen wegen seiner Rückstellkraft wieder seine ursprüngliche Form ein (Figur 15).

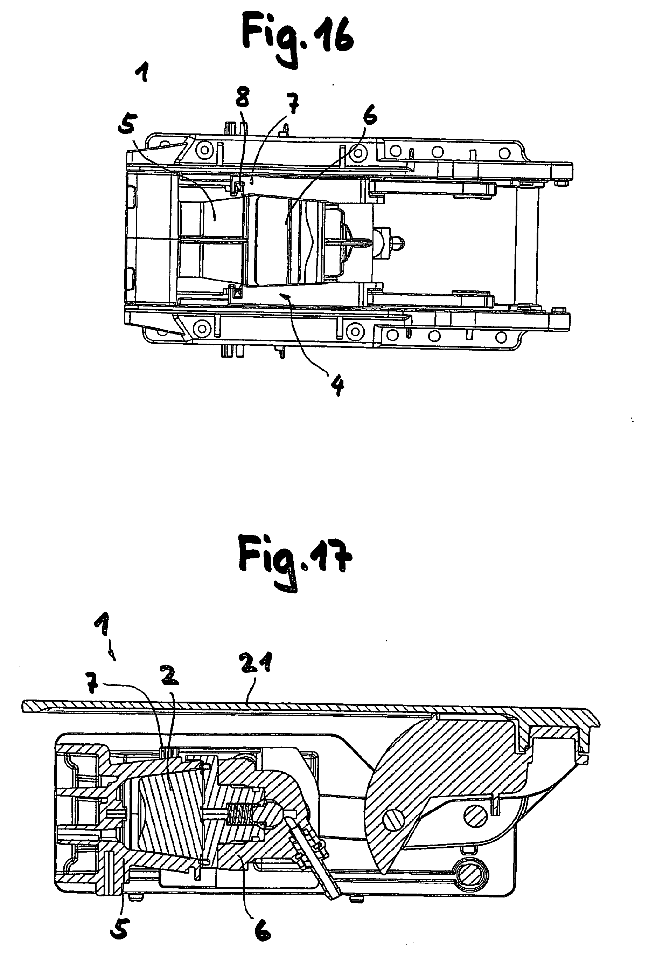

In den Figuren 16 und 17 ist die Vorrichtung in Schliessstellung gezeigt. In dieser Stellung ist die Kapsel 2 in der durch die gegeneinander gepressten Kammerteile 5 und 6 gebildeten Kammer eingeschlossen. In dieser Stellung kann nun eine Extraktionsflüssigkeit wie z.B. Wasser durch die Kapsel durchgeleitet werden. Die dazu erforderlichen Pumpen, Ventile, Durchlauferhitzer usw. sind dem Fachmann bekannt und werden hier nicht dargestellt und beschrieben.

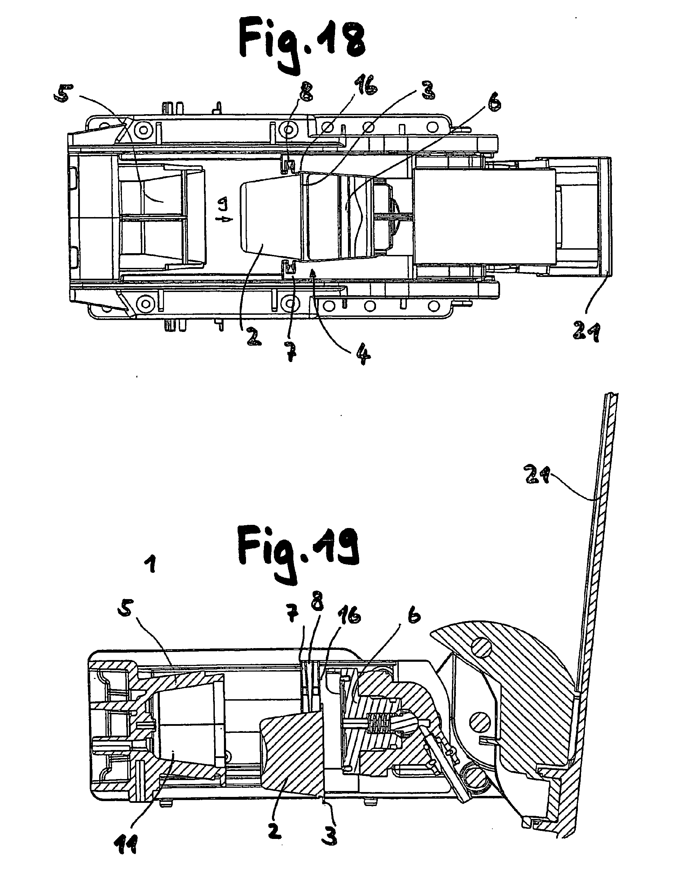

Nach Beendigen der Getränkezubereitung kann der Schwenkhebel 21 hochgeschwenkt und so der Öffnungsvorgang erwirkt werden. In den Figuren 18 bis 20 ist eine Offenstellung nach dem Hochschwenken gezeigt. Wie insbesondere aus Figur 19 hervorgeht, fällt die Kapsel 2 spätestens in der Offenstellung (oder beim Übergang in die Offenstellung) durch ihr Eigengewicht aus der Vorrichtung heraus. Durch die besondere Gestaltung der Positioniereinheit 4 ist die Kapsel 2 auf einfache Art und Weise unter Schwerkrafteinwirkung entfernbar.

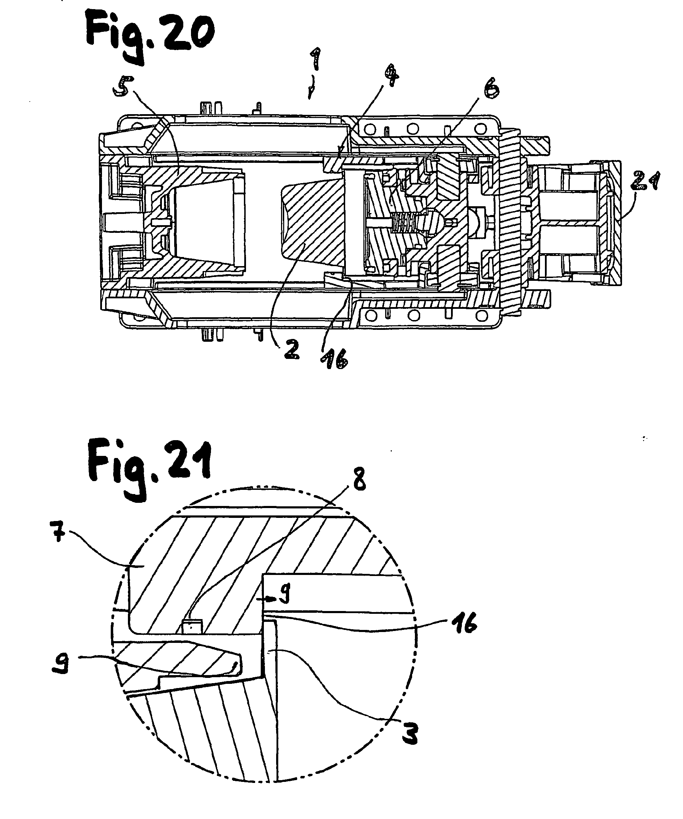

Die Hinterschneidung 16 kann zum Herausziehen der Kapsel 2 aus der Kavität 11 verwendet werden. Wird nämlich beim Öffnungsvorgang der Haltebacken 7 in g-Richtung bewegt, so stösst die Hinterschneidung 16 an den Kragen 3 an und zieht so die Kapsel heraus (Figur 21).

Wie aus dem zweiten Ausführungsbeispiel gemäss Figur 22 hervorgeht, muss die Positioniereinheit nicht zwingend starr ausgestaltet sein. Das erste Ausführungsbeispiel nach den Figuren 1 bis 21 beschreibt eine Positioniereinheit, die zwar zusammen mit dem beweglichen Kammerteil verschiebbar ist, ansonsten jedoch unbeweglich ist. Insbesondere ist sie in Bezug auf die x-Richtung unbeweglich (vgl. Fig. 1). In Figur 22 ist ein Ausführungsbeispiel für die erfindungsgemässe Vorrichtung gezeigt, bei dem die Positioniereinheit wenigstens beschränkt beweglich ausgebildet ist. Diese Vorrichtung zeichnet sich unter anderem dadurch aus, dass für die Positioniereinheit 4 doppelwandige Haltebacken 7 vorgesehen sind, die beim Schliessvorgang in axialer Richtung parallelogrammartig nachgeben können. Bei den Haltebacken 4 handelt es sich um Bauteile aus Federstahl. Ausserdem ist hier die Positioniereinheit fest am Gestell angeordnet und bewegt sich nicht zusammen mit dem Verschlussteil 6. Vielmehr stösst letzteres die Kapsel aus der Positioniereinheit und führt sie in den Kapselhalter 5 über, ohne dass sie dabei herunterfallen kann. Weiterhin sind in Figur 22 Penetrationsmittel 12 zum Perforieren einer Deckfolie der Kapsel 2 und zum Durchleiten des Extraktionsmediums erkennbar.

## Patentansprüche

1. Vorrichtung zum Zubereiten eines flüssigen Lebens- oder Genussmittels aus einem in einer Portionsverpackung (2), insbesondere in einer Kapsel, enthaltenen Verpackungsgut mit einem Medium, wobei die Portionsverpackung einen vorzugsweise umlaufenden Kragen (3) aufweist, und über eine Positioniereinheit (4) durch Beaufschlagung des Kragens (3) in einer Einlegeposition zwischen zwei in einer Offenstellung voneinander beabstandeten Kammerteilen (5,6) positionierbar ist, und wobei die Kammerteile (5,6) zum Erstellen einer Schliesstellung relativ zueinander bewegbar sind und in der Schliessstellung eine Kammer bilden, in der die Portionsverpackung (2) einschliessbar ist, wobei in der Schliessstellung das Medium durch die Portionsverpackung (2) durchleitbar ist, und wobei die Positioniereinheit (4) derart ausgestaltet ist, dass sie beim Bewegen der Kammerteile (5,6) von der Offenstellung in die Schliessstellung derart auf den Kragen (3) einwirkt, dass der Kragen durch Verformung aus der Einlegeposition von der Positioniereinheit (4) befreibar ist, **dadurch gekennzeichnet, dass** die Positioniereinheit (4) zwei einander gegenüberliegende Haltebacken (7) mit Führungsmitteln (8) umfasst, in die der Kragen der Portionsverpackung (2) in der Einlegeposition aufnehmar ist, und dass die Führungsmittel jeweils einen sich in Einführrichtung (e) der Kapsel verjüngenden Führungskanal (8) in Form einer Nut aufweisen, wobei der Führungskanal (8) derart dimensioniert ist, dass der Kragen (3) in der Einlegeposition klemmend im Führungskanal (8) gehalten ist.

2. Vorrichtung nach Anspruch 1, **dadurch gekennzeichnet, dass** wenigstens eines der Kammerteile (5,6) in axialer Richtung (z) verschiebbar ist und dass für die Freigabe aus der Einlegeposition die Positioniereinheit (4) eine Anschlagfläche (13) zum abschnittsweisen Umklappen oder Umbiegen des Kragens (3) in axialer Richtung aufweist.

3. Vorrichtung nach einem der Ansprüche 1 oder 2, **dadurch gekennzeichnet, dass** eines der Kammerteile als Kapselhalter mit einer Kavität zur Aufnahme einer Kapsel und das andere Kammerteil als Verschlussteil zum Verschliessen der Kavität ausgebildet ist.

4. Vorrichtung nach einem der Ansprüche 1 bis 3, **dadurch gekennzeichnet, dass** die einander gegenüberliegenden Seitenwände (18, 18') einer Nut in Einführrichtung (e) der Kapsel keilförmig ausgerichtet sind.

5. Vorrichtung nach einem der Ansprüche 1 bis 4, **dadurch gekennzeichnet, dass** die Nutböden (17) der Nuten an den sich gegenüberliegenden Haltebacken (7) als Keilflächen ausgebildet sind, die sich in Einführungsrichtung der Kapsel verjüngen.

6. Vorrichtung nach einem der Ansprüche 1 bis 5, **dadurch gekennzeichnet, dass** die Führungsmittel (8) bezogen auf die Einführrichtung (e) einen Einführabschnitt (14) und einen daran anschliessenden Positionierabschnitt (15) aufweisen, wobei der Positionierabschnitt (15) gegenüber dem Einführabschnitt (14) zum Vorbeiführen eines der Kammerteile (5,6) beim Schliessvorgang zurückversetzt ist.

7. Vorrichtung nach einem der Ansprüche 1 bis 6, **dadurch gekennzeichnet, dass** die nutartigen Führungskanäle (8) in einem die Einlegeposition festlegenden Abschnitt eine Nuttiefe (t) von maximal 2 mm, bevorzugt maximal 1 mm aufweisen.

8. Vorrichtung nach einem der Ansprüche 1 bis 7, **dadurch gekennzeichnet, dass** an der Positioniereinheit (4) wenigstens ein Mitnehmer (16) angeordnet ist, mit dem die Kapsel (3) bei einem Öffnungsvorgang zum Wiederherstellen der Offenstellung aus der Schliessstellung aus einer durch eines der Kammerteile gebildete Kavität (11) entfernbar ist.

9. Vorrichtung nach Anspruch 8, **dadurch gekennzeichnet, dass** der Mitnehmer eine am Haltebacken (7) angeordnete Hinterschneidung (16) ist, über die der Kragen (3) zum Herausziehen der Kapsel in axialer Richtung (z) beim Öffnungsvorgang erfassbar ist.

10. Vorrichtung nach einem der Ansprüche 1 bis 9, **dadurch gekennzeichnet, dass** der Kragen (3) an einem relativ zur Positioniereinheit (4) in axialer Richtung (z) bewegbaren, einem Kammerteil (5) zugeordneten Halterand (9) abstützbar ist und dass der Halterand (9) eine Knickstelle für das Umklappen des Kragens (3) beim Schliessvorgang definiert.

11. Vorrichtung nach Anspruch 10, **dadurch gekennzeichnet, dass** am Halterand (9) eine Anschrägung (10) zur kurzzeitigen Aufnahme des umgeklappten Kragens (3) anschliesst.

12. Vorrichtung nach einem der Ansprüche 1 bis 11, **dadurch gekennzeichnet, dass** ein Kammerteil (5) feststehend und das andere Kammerteil (6) beweglich in der Vorrichtung angeordnet ist, und dass die Positioniereinheit (4) zusammen mit dem beweglichen Kammerteil (6) in axialer Richtung (z) verfahrbar ist.

13. Vorrichtung nach Anspruch 12, **dadurch gekennzeichnet, dass** das feste Kammerteil (5) hinsichtlich seiner Aussenkonfiguration derart dimensioniert ist, dass es beim Schliessvorgang zwischen den Haltebacken (7) einführbar ist.

14. Anordnung zum Zubereiten eines flüssigen Lebens- oder Genussmittels mit einer Kapsel, bestehend aus einem topf- oder becherförmigen Kapselkörper, an den sich ein umlaufender Kragen anschliesst und mit einer Vorrichtung nach einem der Ansprüche 1 bis 13.

15. Verwendung einer Portionsverpackung (2), insbesondere einer Kapsel in einer Vorrichtung (1) gemäss einem der Ansprüche 1 bis 13, mit einem vorzugsweise umlaufenden Kragen (3), wobei der Kragen (3) derart flexibel ausgebildet ist, dass er beim Schliessvorgang zum Lösen der haltenden Beaufschlagung der Einlegeposition durch die Positioniereinheit (4) verformbar ist.

## Claims

1. Device for preparing a liquid foodstuff or semi-luxury product from a packaged product contained in a portioned packaging (2), in particular in a capsule, with a medium, wherein the portioned packaging has a preferably circumferential collar (3), and is positionable via a positioning unit (4) by impinging on the collar (3) in an insertion position between two chamber parts (5, 6) that are spaced apart from each other in an open position, and wherein the chamber parts (5, 6) are moveable in relation to each other for creating a closed position and in the closed position form a chamber in which the portioned packaging (2) is enclosable, wherein in the closed position the medium is conductable through the portioned packaging (2), and wherein the positioning unit (4) is configured in such a manner that, when the chamber parts (5, 6) are moved from the open position into the closed position, said positioning unit acts on the collar (3) in such a manner that, by deforming, the collar is releasable from the insertion position in the positioning unit (4), **characterized in that** the positioning unit (4) includes two holding jaws (7) situated opposite each other with guiding means (8) in which the collar of the portioned packaging (2) is accommodatable in the insertion position, and **in that** the guiding means have in each case a guiding channel (8) in the form of a groove that tapers in the insertion direction (e) of the capsule, wherein the guiding channel (8) is dimensioned in such a manner that the collar (3) is held in a clamping manner in the insertion position in the guiding channel (8).

2. Device according to Claim 1, **characterized in that** at least one of the chamber parts (5, 6) is displaceable in an axial direction (z) and **in that** for the release from the insertion position, the positioning unit (4) has a stop face (13) for the sectional folding over or bending over of the collar (3) in the axial direction.

3. Device according to either of Claims 1 and 2, **characterized in that** one of the chamber parts is realized as a capsule holder with a cavity for accommodating a capsule, and the other chamber part is realized as a closure part for closing the cavity.

4. Device according to one of Claims 1 to 3, **characterized in that** the side walls (18, 18'), which are located opposite each other, of a groove are aligned in a wedge-shaped manner in the insertion direction (e) of the capsule.

5. Device according to one of Claims 1 to 4, **characterized in that** the groove bottoms (17) of the grooves on the opposite holding jaws (7) are realized as wedge faces that taper in the insertion direction of the capsule.

6. Device according to one of Claims 1 to 5, **characterized in that** the guiding means (8), with reference to the insertion direction (e), comprise an insertion portion (14) and a positioning portion (15) that is connected thereto, wherein the positioning portion (15) is set back in relation to the insertion portion (14) for the passing of one of the chamber parts (5, 6) during the closing operation.

7. Device according to one of Claims 1 to 6, **characterized in that** the groove-like guiding channels (8) have a maximum groove depth (t) of 2 mm, preferably a maximum depth of 1 mm, in a portion that defines the insertion position.

8. Device according to one of Claims 1 to 7, **characterized in that** at least one entrainment means (16) is located on the positioning unit (4), by means of which entrainment means the capsule (3) is removable from a cavity (11) formed by one of the chamber parts during an opening operation for restoring the open position from the closed position.

9. Device according to Claim 8, **characterized in that** the entrainment means is an undercut (16) located on the holding jaw (7), via which undercut the collar (3) is graspable for pulling the capsule out in the axial direction (z) during the opening operation.

10. Device according to one of Claims 1 to 9, **characterized in that** the collar (3) is supportable on a holding edge (9), which is moveable in the axial direction (z) in relation to the positioning unit (4) and is associated with a chamber part (5), and **in that** the holding edge (9) defines a bending point for the folding over of the collar (3) during the closing operation.

11. Device according to Claim 10, **characterized in that** a beveling (10) connects to the holding edge (9) for the short-term accommodating of the folded-over collar (3).

12. Device according to one of Claims 1 to 11, **characterized in that** one chamber part (5) is located in the device in a fixed manner and the other chamber part (6) in a moveable manner, and **in that** the positioning unit (4) is moveable in the axial direction (z) together with the moveable chamber part (6).

13. Device according to Claim 12, **characterized in that** the fixed chamber part (5) is dimensioned with regard to its outer configuration in such a manner that it is insertable between the holding jaws (7) during the closing operation.

14. Arrangement for preparing a liquid foodstuff or semi-luxury product with a capsule, comprising a pot-like or cup-like capsule body to which is connected a circumferential collar, and with a device according to one of Claims 1 to 13.

15. Use of a portioned packaging (2), in particular a capsule in a device (1) according to one of Claims 1 to 13, having a preferably circumferential collar (3), wherein the collar (3) is configured so as to be flexible in such a manner that during the closing operation, said collar is deformable by the positioning unit (4) for releasing the holding impingement of the insertion position.

## Revendications

1. Dispositif de préparation d'un produit alimentaire ou de dégustation liquide provenant d'un produit emballé avec une substance, contenu dans un emballage en portion (2), en particulier dans une capsule, l'emballage en portion présentant un collet (3) de préférence périphérique, et pouvant être positionné par le biais d'une unité de positionnement (4) par sollicitation du collet (3) dans une position d'insertion entre deux parties de chambre (5, 6) espacées l'une de l'autre dans une position d'ouverture, les parties de chambre (5,6) pouvant être déplacées l'une par rapport à l'autre pour créer une position de fermeture et, dans la position de fermeture, formant une chambre dans laquelle peut être inclus l'emballage en portion (2), la substance pouvant être guidée à travers l'emballage en portion (2) dans la position de fermeture et l'unité de positionnement (4) étant configurée de telle sorte que, lors du déplacement des parties de chambre (5, 6) de la position d'ouverture dans la position de fermeture, elle agisse sur le collet (3) de telle sorte que le collet puisse être libéré de l'unité de positionnement (4) par déformation hors de la position d'insertion, **caractérisé en ce que** l'unité de positionnement (4) comprend deux mâchoires de retenue (7) opposées l'une à l'autre avec des moyens de guidage (8), dans lesquelles le collet de l'emballage en portion (2) peut être reçu dans la position d'insertion, et **en ce que** les moyens de guidage présentent à chaque fois un canal de guidage (8) en forme de rainure se rétrécissant dans la direction d'insertion (e) de la capsule, le canal de guidage (8) étant dimensionné de telle sorte que le collet (3) soit maintenu dans la position d'insertion par serrage dans le canal de guidage (8).

2. Dispositif selon la revendication 1, **caractérisé en ce qu'**au moins l'une des parties de chambre (5, 6) est déplaçable dans une direction axiale (z) et **en ce que** pour la libération hors de la position d'insertion, l'unité de positionnement (4) présente une face de butée (13) pour rabattre ou replier en partie le collet (3) dans la direction axiale.

3. Dispositif selon l'une quelconque des revendications 1 ou 2, **caractérisé en ce que** l'une des parties de chambre est réalisée sous forme de dispositif de retenue de capsule avec une cavité pour recevoir une capsule et l'autre partie de chambre est réalisée sous forme de partie de fermeture pour fermer la cavité.

4. Dispositif selon l'une quelconque des revendications 1 à 3, **caractérisé en ce que** les parois latérales opposées l'une à l'autre (18, 18') d'une rainure sont orientées en forme de coin dans la direction d'insertion (e) de la capsule.

5. Dispositif selon l'une quelconque des revendications 1 à 4, **caractérisé en ce que** les fonds de rainure (17) des rainures sont réalisés sur les mâchoires de retenue (7) opposées sous forme de faces de coins, qui se rétrécissent dans la direction d'insertion de la capsule.

6. Dispositif selon l'une quelconque des revendications 1 à 5, **caractérisé en ce que** les moyens de guidage (8) présentent, par rapport à la direction d'insertion (e), une portion d'insertion (14) et une portion de positionnement (15) s'y raccordant, la portion de positionnement (15) étant en retrait par rapport à la portion d'insertion (14) en vue de laisser passer l'une des parties de chambre (5, 6) lors de l'opération de fermeture.

7. Dispositif selon l'une quelconque des revendications 1 à 6, **caractérisé en ce que** les canaux de guidage (8) en forme de rainure, dans une portion fixant la position d'insertion, présentent une profondeur de rainure (t) de 2 mm au maximum, de préférence de 1 mm au maximum.

8. Dispositif selon l'une quelconque des revendications 1 à 7, **caractérisé en ce qu'**au moins un dispositif d'entraînement (16) est disposé sur l'unité de positionnement (4), avec lequel la capsule (3), dans le cas d'une opération d'ouverture pour revenir à la position d'ouverture depuis la position de fermeture, peut être enlevée hors d'une cavité (11) formée par l'une des parties de chambre.

9. Dispositif selon la revendication 8, **caractérisé en ce que** le dispositif d'entraînement est une contre-dépouille (16) disposée sur la mâchoire de retenue (7), par le biais de laquelle le collet (3) peut être saisi pour faire ressortir la capsule dans la direction axiale (z) lors de l'opération d'ouverture.

10. Dispositif selon l'une quelconque des revendications 1 à 9, **caractérisé en ce que** le collet (3) peut être supporté sur un bord de retenue (9) déplaçable par rapport à l'unité de positionnement (4) dans la direction axiale (z), associé à une partie de chambre (5), et **en ce que** le bord de retenue (9) définit un point d'inflexion pour le rabattement du collet (3) lors de l'opération de fermeture.

11. Dispositif selon la revendication 10, **caractérisé en ce qu'**un biseau (10) pour recevoir brièvement le collet rabattu (3) se raccorde au bord de retenue (9).

12. Dispositif selon l'une quelconque des revendications 1 à 11, **caractérisé en ce qu'**une partie de chambre (5) est disposée fixement et l'autre partie de chambre (6) est disposée de manière mobile dans le dispositif, et **en ce que** l'unité de positionnement (4) peut être déplacée conjointement avec la partie de chambre mobile (6) dans la direction axiale (z).

13. Dispositif selon la revendication 12, **caractérisé en ce que** la partie de chambre fixe (5) est dimensionnée en termes de sa configuration extérieure de telle sorte qu'elle puisse être introduite entre les mâchoires de retenue (7) lors de l'opération de fermeture.

14. Agencement de préparation d'un produit alimentaire ou de dégustation liquide comprenant une capsule, constituée d'un corps de capsule en forme de pot ou de godet, sur lequel se raccorde un collet périphérique et comprenant un dispositif selon l'une quelconque des revendications 1 à 13.

15. Utilisation d'un emballage en portion (2), notamment d'une capsule, dans un dispositif (1) selon l'une quelconque des revendications 1 à 13, comprenant un collet de préférence périphérique (3), le collet (3) étant réalisé de manière flexible de telle sorte qu'il puisse être déformé lors de l'opération de fermeture pour libérer la sollicitation de retenue de la position d'insertion par l'unité de positionnement (4).
